# EUROPÄISCHE PATENTSCHRIFT

(11) **EP 0 926 384 B1**
(45) Veröffentlichungstag und Bekanntmachung des Hinweises auf die Patenterteilung: **18.08.2004**
(21) Anmeldenummer: 98120813.5
(22) Anmeldetag: 03.11.1998
(51) Int. Cl.: F16F 9/348

(54) **Kolben für einen hydraulischen Schwingungsdämpfer**
Piston for a hydraulic vibration damper
Piston pour un amortisseur de vibrations hydraulique

(30) Priorität: 17.12.1997 DE 19755994
(43) Veröffentlichungstag der Anmeldung: 30.06.1999
(73) Patentinhaber: ThyssenKrupp Bilstein GmbH, 58256 Ennepetal (DE)
(72) Erfinder: Adrian, Adolf, 58256 Ennepetal (DE); Angermann, Rolf, Dr.-Ing., 58256 Ennepetal (DE)

(56) Entgegenhaltungen:
- DE-A- 3 932 669
- DE-C- 970 515
- DE-C- 4 410 996
- DE-U- 8 221 277
- FR-A- 2 420 060
- PATENT ABSTRACTS OF JAPAN vol. 015, no. 039 (M-1075), 30. Januar 1991 (1991-01-30) & JP 02 278026 A (TOKICO LTD), 14. November 1990 (1990-11-14)
- PATENT ABSTRACTS OF JAPAN vol. 009, no. 063 (M-365), 20. März 1985 (1985-03-20) & JP 59 197639 A (TOKICO KK), 9. November 1984 (1984-11-09)
- PATENT ABSTRACTS OF JAPAN vol. 1996, no. 04, 30. April 1996 (1996-04-30) & JP 07 332425 A (TOKICO LTD), 22. Dezember 1995 (1995-12-22)

## Beschreibung

Die Erfindung betrifft einen Kolben für einen hydraulischen Schwingungsdämpfer an Kraftfahrzeugen nach dem Oberbegriff des Anspruchs 1. Um das Dämpfungsverhalten von hydraulischen Schwingungsdämpfern an Kraftfahrzeugen sicherer und komfortabler zu gestalten, ist man bemüht, die Geschwindigkeits-Dämpfungs-Kennlinie degressiv zu gestalten. Diese Gestaltung erfolgt durch die Ausbildung und Wirkung der die jeweiligen Durchströmkanäle wechselseitig abdeckenden Rückschlagventile. Hierzu gibt es für die unterschiedlich gestalteten Kolbenkörper mit jeweils unterschiedlich gestalteten Strömungskanälen verschiedene Wege, die sich auch noch hinsichtlich ihres Einsatzes bei Einrohr- oder Zweirohrstoßdämpfern unterscheiden.

Für einen Kolben mit einem Kolbenkörper, bei dem zwei Gruppen von gegenseitig mit Dämpfungsflüssigkeit durchströmten Kanälen vorgesehen sind, die etwa kreisförmig angeordnet sind und sich annähernd parallel zur Kolbenstange erstrecken, wobei eine Gruppe innerhalb der anderen Gruppe liegt, ist es nach der DE 39 32 669 A1, die dem Oberbegriff des Anspruchs 1 entspricht, bekannt, die innenliegenden Kanäle mit einem Rückschlagventil zu verschließen, das zwei mit Abstand übereinanderliegende Federscheiben oder Federscheibenpakete aufweist, wobei eine am Auslauf der innenliegenden Kanäle liegende Federscheibe bei geringem Druck einen ersten Durchströmquerschnitt freigibt und das mit Abstand darüberliegende Federscheibenpaket bei höher werdendem Flüssigkeitsdruck einen weiteren Durchströmquerschnitt. Die innenliegenden Kanäle bilden bei diesem Kolben die Regelung der Zugstufe. Zur Erzeuaunq einer degressiven Kennung für die Druckstufe wird bei dieser Ausbildung eines Stoßdämpfers als Zweirohrdämpfer ein zusätzliches Bodenventil verwendet.

Für Einrohrstoßdämpfer, bei denen der Arbeitskolben variabel degressiv einstellbar sein soll, sind Kolbenkörper der vorbeschriebenen Art nicht bekannt. Hier werden mehrteilige Kolben mit einem zentralen Zulauf für die Zug- und Druckstufe oder mit schräg von außen nach innen verlaufenden Durchflußkanälen verwendet, wie sie aus der DE 41 39 746 A1 bekannt sind. Nachteilig hierbei ergeben sich sehr aufwendige Arbeitskolbenkonstruktionen.

Der Erfindung liegt die Aufgabe zugrunde, einen Kolben für einen hydraulischen Schwingungsdämpfer mit einem Kolbenkörper nach dem Oberbegriff des Anspruchs 1 derartig weiterzubilden, daß mit einfachen Mitteln ein degressives Verhalten sowohl für die Zug- als auch für die Druckstufe erreichbar wird.

Diese Aufgabe wird erfindungsgemäß mit den Merkmalen des Anspruchs 1 gelöst. Vorteilhafte Aus- und Weiterbildungen sind in den Ansprüchen 2 bis 9 beschrieben. Die mit der Erfindung erzielten Vorteile bestehen insbesondere darin, daß sowohl der Kolbenkörper als auch die übrigen mit ihm zum Arbeitskolben zusammenwirkenden Bauteile äußerst einfach und preiswert herstellbar sind. Darüber hinaus kann in einfacher Weise durch Austausch verschiedener Bauelemente, insbesondere durch Austausch von Vorspannteilen und Federscheiben, nicht nur ein degressives Dämpfungsverhalten des Arbeitskolbens in Zug- und Druckrichtung, sondern auch eine Anpassung der Dämpfungskräfte bei gleichen Abmessungen des Stoßdämpfers für verschiedene Fahrzeuge erzielt werden, was zu einer wesentlich geringeren Lagerhaltung für die Einzelteile und einer besseren Maschinenauslastung führt. Darüber hinaus weist der Kolbenkörper für den Arbeitskolben des erfindungsgemäßen Stoßdämpfers den Vorteil auf, daß er einteilig, vorzugsweise als Sinterpreßteil, hergestellt werden kann und von daher einfach zu fertigen ist.

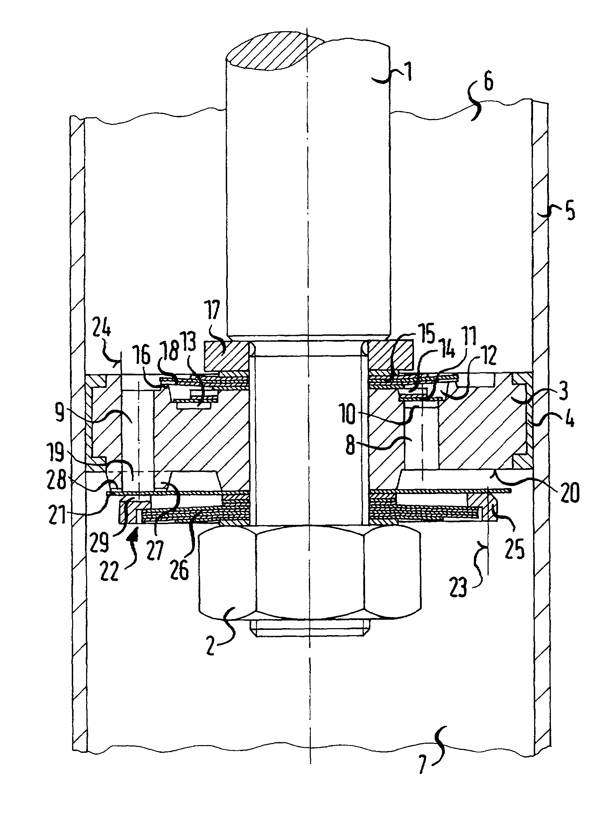

Ein Ausführungsbeispiel der Erfindung ist in der Zeichnung dargestellt und wird im folgenden näher beschrieben. Die einzige Figur zeigt einen winkelversetzten Schnitt durch die Achse eines Stoßdämpfers. Dabei sind im Bild links die außenliegenden Kanäle für die Zugstufe und rechts die innenliegenden Kanäle für die Druckstufe erkennbar.

Der Kolben für einen hydraulischen Schwingungsdämpfer, auch Arbeitskolben genannt, ist am Ende der Kolbenstange 1 angebracht, die hier in einem Gewindezapfen ausläuft. Die Einzelteile des Kolbens werden als Gesamtpaket mit einer Mutter 2 gegen den Schaft der Kolbenstange 1 verspannt. Das tragende Teil des Kolbens ist der Kolbenkörper 3, der mit seinem Innendurchmesser am Gewinde der Kolbenstange 1 anliegt und an seinem Außendurchmesser einen Gleitring 4 trägt. Der Gleitring 4 wiederum gleitet am Innenmantel des Dämpferzylinders 5. Dadurch trennt der Kolben den Innenraum des Schwingungsdämpfers in zwei Arbeitsräume 6, 7. Den Kolbenkörper 3 durchdringen zwei Gruppen von Kanälen 8, 9, wovon jede Gruppe kreisförmig angeordnet ist und sich annähernd parallel zur Kolbenstange 1 erstreckt. Dabei liegt eine Gruppe der Kanäle 8 kreisförmig innerhalb der ebenfalls kreisförmig angeordneten zweiten Gruppe von Kanälen 9. Die Ausströmöffnung 10 der innenliegenden Kanäle 8 ist kolbenstangenseitig durch eine ringförmig ausgebildete, federnd nachgiebige Federscheibe 11 verschlossen. Diese Federscheibe 11 liegt in einem Ringkanal 12 und verschließt einen, die innenliegenden Kanäle 8 verbindenden Ringkanal 13. Die Federscheibe 11 wird durch eine über den Umfang gewellte Scheibe 14 durch darüberliegende Ringscheiben verspannt. Der oberhalb der Federscheibe 11 liegende Ringkanal 12 wiederum wird durch ein Federscheibenpaket 15 verschlossen. Der Ringkanal 12 ist außen umlaufend mit einer Wulst 16 ausgebildet, auf der das Federscheibenpaket 15 unter Vorspannung aufliegt. Ein Anschlagring 17 dient zur Anlage des Federscheibenpakets 15 an den abgesetzten Schaft der Kolbenstange 1. Beim Einfahren der Kolbenstange 1 in den Dämpferzylinder 5 wird Dämpfungsflüssigkeit aus dem untenliegenden Arbeitsraum 7 in den obenliegenden Arbeitsraum 6 verdrängt. Sie fließt durch die innenliegenden Kanäle 8. Bei geringem Überdruck im untenliegenden Arbeitsraum 7 gegenüber dem obenliegenden Arbeitsraum 6 hebt sich nur die Federscheibe 11 von ihrem Sitz ab, die Dämpfungsflüssigkeit fließt dann ausschließlich durch eine Bypassöffnung 18 in der aufliegenden Federscheibe des Federscheibenpakets 15. Erst bei größer werdendem Druckunterschied zwischen Arbeitsraum 7 und Arbeitsraum 6 hebt sich auch das Federscheibenpaket 15 von der Wulst 16 ab und gibt dann eine größere Durchströmöffnung frei.

Die außenliegenden Kanäle 9 dienen zum Durchströmen der Dämpfungsflüssigkeit vom obenliegenden Arbeitsraum 6 in den untenliegenden Arbeitsraum 7 beim Herausfahren der Kolbenstange 1 aus dem Dämpferzylinder 5, also für die Zugrichtung. Diese Kanäle 9 sind an der von der Kolbenstange 1 abgewandten Seite des Kolbenkörpers 3 an ihren Ausströmöffnungen 19 wulstartig erhöht ausgebildet, so daß sie über die untere Stirnseite 20 des Kolbenkörpers 3 hinausragen. Dadurch wird erreicht, daß die Zuströmung der Dämpfungsflüssigkeit aus dem Arbeitsraum 7 in die innenliegenden Kanäle 8 ungestört erfolgen kann.

Die Ausströmöffnungen 19 der außenliegenden Kanäle 9 sind durch eine Abdeckscheibe 21 verschlossen. Auf dieser Abdeckscheibe 21 liegt von außen ein Ring 22 auf. Der Außendurchmesser 23 der auf der Abdeckscheibe 21 aufliegenden Auflagefläche des Ringes 22 ist kleiner als die äußerste Kontur 24 der außenliegenden Kanäle 9. Der Ring 22 weist an seiner von der Abdeckscheibe 21 abgewandten Seite einen außen umlaufenden Vorsprung 25 auf, so daß der Ring 22 einen L-förmigen Querschnitt erhält. Innerhalb des Vorsprungs 25 liegt unter Vorspannung ein Federscheibenpaket 26 von außen auf dem Ring 22 auf. Alle Teile des Kolbens werden, wie bereits vorne beschrieben, über eine Mutter 2 zusammengezogen. Zwischen den einzelnen Scheiben, Federscheiben, Abdeckscheiben und dem Kolbenkörper 3 sowie dem Schaft der Kolbenstange 1 und der Mutter 2 liegen diverse Zwischenscheiben, die im Detail nicht beschrieben sind.

Bei geringem Überdruck der Dämpfungsflüssigkeit im oberen Arbeitsraum 6 gegenüber dem unteren Arbeitsraum 7, also beim Bewegen der Kolbenstange 1 in Zugrichtung, hebt sich die Abdeckscheibe 21 am äußeren Rand geringfügig von den wulstartigen Erhöhungen 27 an der Ausströmöffnung 19 der außenliegenden Kanäle 9 ab. Erst bei größerer Druckdifferenz zwischen Arbeitsraum 6 und Arbeitsraum 7 kann die Abdeckscheibe 21 über den Ring 22 gegen die Vorspannkräfte des Federscheibenpaketes 26 weiter abheben, wodurch ein größerer Durchströmquerschnitt freigegeben wird.

Die wulstartige Erhöhung 27 kann entsprechend der Kontur der einzelnen außenliegenden Kanäle 9 kreisförmig, oval, viereckig oder in anderer Weise geformt sein. Es ist auch denkbar, daß diese wulstartige Erhöhung 27 sich um zwei oder mehr einzelne Kanäle 29 erstreckt und diese somit gemeinsam umgibt. Ebenso wie die außenliegenden Kanäle 9 können auch die innenliegenden Kanäle 8 eine beliebige Querschnittsform aufweisen.

Eine oder mehrere Erhöhungen 27 an der Ausströmöffnung 19 der außenliegenden Kanäle 9 ist mit einer oder mehreren nicht verschließbaren Bypassöffnungen 28 ausgebildet. Diese Bypassöffnung 28 dient dazu, eine nicht durch die Rückschlagventile sperrbare geringe Durchströmung des Kolbens mit Dämpfungsflüssigkeit zum Ausgleich kleiner Druckdifferenzen zu ermöglichen, was die Klapperneigung des Ventils bei hochfrequenten Schwingungen geringer Amplitude verringert.

Durch den Austausch unterschiedlich dicker Federscheiben 11 oder Abdeckscheiben 21 oder auch einer unterschiedlichen Anzahl von Federscheiben in den Federscheibenpaketen 15, 26 und durch das Auswechseln von Zwischenscheiben unterschiedlicher Dicke ist es in einfacher Weise möglich, bei gleichbleibenden Kolbenstangenabmessungen, einem gleichbleibenden Durchmesser des Dämpferzylinders 5 und dem Einsatz gleicher Kolbenkörper 3, die Dämpfungskennlinie des Arbeitskolbens hinsichtlich ihrer Höhe und Form sowohl für die Druckseite als auch für Zugseite in großem Umfang in einfacher Weise zu ändern und an unterschiedliche Fahrzeuge entsprechend anzupassen.

Zur hydraulischen Entlastung zwischen dem vom Ring 22 eingeschlossenen Raum zwischen Abdeckscheibe 21 und Federscheibenpaket 26 ist im Ring 22 wenigstens eine radial verlaufende Druckentlastungsöffnung 29 vorgesehen.

### Bezugszeichenliste

- 1.: Kolbenstange
- 2.: Mutter
- 3.: Kolbenkörper
- 4.: Gleitring
- 5.: Dämpferzylinder
- 6.: Arbeitsraum
- 7.: Arbeitsraum
- 8.: Kanal
- 9.: Kanal
- 10.: Ausströmöffnung
- 11.: Federscheibe
- 12.: Ringkanal
- 13.: Ringkanal
- 14.: gewellte Scheibe
- 15.: Federscheibenpaket
- 16.: Wulst
- 17.: Anschlagring
- 18.: Bypassöffnung
- 19.: Ausströmöffnung
- 20.: Stirnseite
- 21.: Abdeckscheibe
- 22.: Ring
- 23.: Außendurchmesser
- 24.: Kontur
- 25.: Vorsprung
- 26.: Federscheibenpaket
- 27.: Erhöhung
- 28.: Bypassöffnung
- 29.: Druckentlastungsöffnung

## Patentansprüche

1. Kolben für einen hydraulischen Schwingungsdämpfer an Kraftfahrzeugen mit einem am Ende der Kolbenstange (1) befestiggten Kolbenkörper (3), der den Dämpferzylinder (5) des Schwingungsdämpfers in zwei Arbeitsräume (6, 7) teilt und der zwei Gruppen von gegensinnig mit Hydraulikflüssigkeit durchströmten, etwa kreisförmig angeordneten, sich annähernd parallel zur Kolbenstange (1) erstreckenden Kanäle (8, 9) aufweist, deren eine Gruppe kreisförmig innerhalb der anderen Gruppe angeordnet ist und mit beidseitig angeordneten, scheibenförmig, teilweise als Federscheibenpaket (15, 26) ausgebildeten Rückschlagventilen, die jeweils eine Gruppe der Kanäle (8, 9) in einer Durchströmrichtung verschließen, wobei das, die Gruppe der innenliegenden Kanäle (8) verschließende Rückschlagventil, zwei mit Abstand übereinanderliegende Federscheiben (11) oder Federscheibenpakete (15) aufweist und die Federscheibe (11 )/das Federscheibenpaket, die/das näher an der Ausströmöffnung (10) der innenliegenden Kanäle (8) liegt, einen ersten Durchströmquerschnitt freigibt und bei höherem Flüssigkeitsdruck die/das darüberliegende Federscheibe/Federscheibenpaket (15) einen weiteren Durchströmquerschnitt frei-gibt und das die Gruppe der außenliegenden Kanäle (9) verschließende Rückschlagventil Zuströmöffnungen für die innenliegenden Kanäle (8) freiläßt, **dadurch gekennzeichnet, daß** das die außenliegenden Kanäle (9) verschließende Rückschlagventil eine federnd nachgiebige, die Ausströmöffnungen (19) der außenliegenden Kanäle (9) verschließende Abdeckscheibe (21) aufweist, wobei sich die Abdeckscheibe (21) über einen in Federbewegungsrichtung mitbewegten, separaten Ring (22) an der von den Kanälen (9) abgewandten Seite gegen ein weiteres Federelement abstützt und der Außendurchmesser (23) der auf der Abdeckscheibe (21) aufliegenden Auflagefläche des Ringes (22) kleiner ist als die äußere Kontur (24) der außenliegenden Kanäle (9).

2. Kolben nach Anspruch 1, **dadurch gekennzeichnet, daß** die Abdeckscheibe (21) eine kreisförmige Außenkontur aufweist.

3. Kolben nach Anspruch 1, **dadurch gekennzeichnet, daß** die Abdeckscheibe (21) eine fingerförmige Außenkontur aufweist.

4. Kolben nach einem oder mehreren der Ansprüche 1 bis 3, **dadurch gekennzeichnet, daß** der Ring (22) wenigstens eine radial verlaufende Druckentlastungsöffnung (29) aufweist.

5. Kolben nach einem oder mehreren der Ansprüche 1 bis 4, **dadurch gekennzeichnet, daß** das weitere, die Abdeckscheibe (21) abstützende Federelement als Federscheibe oder Federscheibenpaket (26) ausgebildet ist.

6. Kolben nach einem oder mehreren der Ansprüche 1 bis 5, **dadurch gekennzeichnet, daß** an einem oder mehreren der Ausströmöffnungen (10) der innenliegenden, der außenliegenden oder beider Gruppen der Kanäle (8, 9) eine nicht verschließbare Bypassöffnung (28) angeordnet ist.

7. Kolben nach Anspruch 6, **dadurch gekennzeichnet, daß** die Bypassöffnung in der aufliegenden Federscheibe oder Abdeckscheibe angeordnet ist.

8. Kolben nach einem oder mehreren der Ansprüche 1 bis 7, **dadurch gekennzeichnet, daß** die aufliegende Federscheibe (11) oder die Abdeckscheibe (21) konkav aufliegend vorgespannt ist.

9. Kolben nach einem oder mehreren der Ansprüche 1 bis 18, **dadurch gekennzeichnet, daß** die Ausströmöffnung (19) der außenliegenden Kanäle (9) wulstartig erhöht ausgebildet ist.

## Claims

1. Piston for a hydraulic vibration damper on motor vehicles having a piston body (3) which is attached to the end of the piston rod (1), divides the damper cylinder (5) of the vibration damper into two working chambers (6, 7) and comprises two groups of channels (8, 9) which have hydraulic fluid flowing therethrough in opposite directions, are arranged approximately in the form of a circle and extend approximately in parallel with the piston rod (1) and of which one group is arranged in the form of a circle inside the other group, and having non-return valves which are disposed on both sides, are disc-shaped, are formed in part as a spring washer assembly (15, 26) and in each case close one group of channels (8, 9) in a direction of flow, wherein the non-return valve which closes the group of inner channels (8) comprises two spring washes (11) or spring washer assemblies (15) which lie at a spaced interval one on top of the other and the spring washer (11) / the spring washer assembly which lies closer to the outlet orifice (10) of the inner channels (8) opens a first through-flow cross-section and at higher fluid pressure the overlying spring washer / spring washer assembly (15) opens a further through-flow cross-section and the non-return valve which closes the group of outer channels (9) opens inlet orifices for the inner channels (8), **characterised in that** the non-return valve which closes the outer channels (9) comprises a resiliently flexible cover disc (21) which closes the outlet orifices (19) of the outer channels (9), wherein the cover disc (21) is supported against a further resilient element on the side remote from the channels (9) by way of a separate ring (22) which is also moved in the direction of resilient movement, and the outer diameter (23) of the support surface of the ring (22) lying on the cover disc (21) is smaller than the outer contour (24) of the outer channels.

2. Piston as claimed in claim 1, **characterised in that** the cover disc (21) comprises a circular outer contour.

3. Piston as claimed in claim 1, **characterised in that** the cover disc (21) comprises a finger-like outer contour.

4. Piston as claimed in one or several of claims 1 to 3, **characterised in that** the ring (22) comprises at least one radially extending pressure-relief orifice (29).

5. Piston as claimed in one or several of claims 1 to 4, **characterised in that** the further resilient element which supports the cover disc (21) is formed as a spring washer or spring washer assembly (26).

6. Piston as claimed in one or several of claims 1 to 5, **characterised in that** a bypass orifice (28) which cannot be closed is disposed on one or several of the outlet orifices (10) of the inner channels, the outer channels or both groups of channels (8, 9).

7. Piston as claimed in claim 6, **characterised in that** the bypass orifice is disposed in the upper spring washer or cover disc.

8. Piston as claimed in one or several of claims 1 to 7, **characterised in that** the upper spring washer (11) or the cover disc (21) is prestressed in such a manner as to lie in a concave manner.

9. Piston as claimed in one or several of claims 1 to 18, **characterised in that** the outlet orifice (19) of the outer channels (9) is formed in such a manner as to have bead-like elevations.

## Revendications

1. Piston pour un amortisseur de vibrations hydraulique pour véhicules à moteur, comportant un corps de piston (3) fixé à l'extrémité de la tige de piston (1), corps de piston (3) qui partage le cylindre d'amortisseur (5) de l'amortisseur de vibrations en deux espaces de travail (6, 7) et qui est pourvu de deux groupes de canaux (8, 9) qui sont traversés dans des sens opposés par des flux d'un fluide hydraulique, qui sont disposés de façon sensiblement circulaire, et qui s'étendent à peu près parallèlement par rapport à la tige de piston (1), un groupe de canaux étant disposé de façon circulaire à l'intérieur de l'autre groupe, et comportant des clapets anti-retour qui sont disposés des deux côtés, se présentent sous forme de disques, et sont conformés en partie en groupes de rondelles élastiques (15, 16) et qui ferment respectivement un groupe de canaux (8, 9) dans l'un des sens de passage; le clapet anti-retour qui ferme le groupe des canaux (8) situés à l'intérieur est pourvu de deux rondelles élastiques (11) ou groupes de rondelles élastiques (15) écartés l'un au-dessus de l'autre, et la rondelle élastique (11) / le groupe de rondelles élastiques (15) qui se trouve plus près de la lumière pour le flux de sortie (10) des canaux (8) situés à l'intérieur libère une première section pour flux de sortie et, sous une pression de fluide plus élevée la rondelle élastique (11) / le groupe de rondelles élastiques (15) situé par-dessus libère une autre section pour flux de sortie, et le clapet anti-retour fermant le groupe de canaux (9) situés à l'extérieur libère des ouvertures d'amenée pour les canaux (8) situés à l'intérieur,
**caractérisé en ce que** la soupape anti-retour fermant les canaux (9) situés à l'extérieur comporte un disque de recouvrement (21) capable de céder de manière élastique, fermant les lumières pour flux de sortie (19) des canaux (9) situés à l'extérieur; le disque de recouvrement (21) prend appui par l'intermédiaire d'un anneau (22) séparé, conjointement déplacé dans la direction du mouvement élastique, du côté opposé aux canaux (9), contre un autre élément élastique, et le diamètre extérieur (23) de la surface d'appui de l'anneau (22) reposant sur le disque de recouvrement (21) est plus petit que le contour extérieur (24) des canaux (9) situés à l'extérieur.

2. Piston suivant la revendication 1, **caractérisé en ce que** le disque de recouvrement (21) est pourvu d'un contour extérieur circulaire.

3. Piston suivant la revendication 1, **caractérisé en ce que** le disque de recouvrement (21) est pourvu d'un contour extérieur en forme de doigt.

4. Piston suivant une ou plusieurs des revendications 1 à 3, **caractérisé en ce que** le disque (21) est pourvu d'au moins une ouverture (29) de détente de détente de la pression, à extension radiale.

5. Piston suivant une ou plusieurs des revendications 1 à 4, **caractérisé en ce que** l'élément élastique supplémentaire supportant le disque de recouvrement (21), est conformé en disque élastique ou en groupe de rondelles élastiques (26).

6. Piston suivant une ou plusieurs des revendications 1 à 5, **caractérisé en ce qu'**une ouverture de dérivation (28) qui ne peut pas être fermée est aménagée sur une ou sur plusieurs des lumières pour flux de sortie (10) des canaux situés à l'intérieur, des canaux situés à l'extérieur ou des deux groupes de canaux (8, 9).

7. Piston suivant la revendication 6, **caractérisé en ce que** l'ouverture de dérivation (18) est aménagée dans le disque élastique ou le disque de recouvrement en appui.

8. Piston suivant une ou plusieurs des revendications 1 à 7, **caractérisé en ce que** le disque élastique (11) en appui, ou le disque de recouvrement (21) est précontraint en appui à l'état concave.

9. Piston suivant une ou plusieurs des revendications 1 à 8, **caractérisé en ce que** la lumière pour le flux de sortie (19) des canaux (9) situés à l'extérieur est conformée avec une surélévation en forme de bourrelet.
